# EUROPÄISCHE PATENTANMELDUNG

(11) **EP 2 275 344 A1**
(43) Veröffentlichungstag der Anmeldung: **19.01.2011**
(21) Anmeldenummer: 10007219.8
(22) Anmeldetag: 13.07.2010
(51) Int. Cl.: B64C 11/06, B64C 11/18, B64C 11/14

(54) **Propeller**

(30) Priorität: 14.07.2009 DE 102009032719
(71) Anmelder: Rolls-Royce Deutschland Ltd & Co KG, 15827 Blankenfelde-Mahlow (DE)
(72) Erfinder: Clemen, Carsten, Dr., 15749 Mittelwalde (DE)
(74) Vertreter: Weber, Joachim

(57) **Zusammenfassung**

Bei einem insbesondere für Flugzeuge vorgesehenen Propeller ist zur Verbesserung der Sekundärluftströmung im Übergangsbereich zwischen Propellerblatt (3) und -nabe (2) ein von der Propellerblatthinterkante (5) ausgehender Abströmschlitz (6) ausgebildet, der so dimensioniert ist, dass gerade die Luftgrenzschicht, aber nicht die Hauptströmung, abfließen kann. Die Propellerverluste werden reduziert und der Propellerschub und der Wirkungsgrad steigen. (Fig. 2)

## Beschreibung

Die Erfindung betrifft einen Propeller, insbesondere für Flugzeuge, der eine mit einer Antriebswelle verbundene Propellernabe mit an dieser angebrachten Propellerblättern umfasst.

Propeller sind gehäuselose Strömungsmaschinen mit auf einer Nabe angebrachten Flügeln oder Blättern, die bei der Rotation einer mit der Nabe verbundenen Antriebswelle von dem umgebenden Medium umströmt werden. Die Propellerblätter können integral mit der Nabe verbunden sein oder als separat gefertigtes Bauteil an der Nabe - beispielsweise mittels einer Schraub- oder Schweißverbindung - befestigt sein. Darüber hinaus können die Propellerblätter in der Propellernabe auch um ihre Hochachse drehbar gelagert sein. Die bekannten Propeller sind insofern nachteilig, als im Übergangsbereich zwischen der Propellernabe und dem Propellerblatt Sekundärströmungsphänomene wie Aufwirbelungen und Eckenablösungen auftreten, die mit Leistungsverlusten verbunden sind und letztlich eine Verringerung des Wirkungsgrades und des Schubes zur Folge haben.

Der Erfindung liegt die Aufgabe zugrunde, einen insbesondere für Flugzeuge vorgesehenen Propeller so weiterzuentwickeln, dass die Leistungsfähigkeit des Propellers und der Propellerwirkungsgrad und der Schub verbessert werden.

Erfindungsgemäß wird die Aufgabe mit einem gemäß den Merkmalen des Patentanspruchs 1 ausgebildeten Propeller gelöst. Vorteilhafte Weiterbildungen der Erfindung sind Gegenstand der Unteransprüche.

Der Grundgedanke der Erfindung besteht in der Ausbildung eines von der Hinterkante jedes Propellers ausgehenden, in Längsrichtung an die Propellernabe angrenzenden Abströmschlitzes, der so dimensioniert ist, dass gerade die Luftgrenzschicht, aber nicht die Hauptströmung abfließen kann. Unter Vermeidung von Eckenablösungen und Aufwirbelungen kann dadurch die Sekundärluftströmung im Übergangsbereich zwischen Propellerblättern und Propellernabe verbessert werden, so dass die Propellerverluste sinken und der Propellerwirkungsgrad entsprechend steigt.

In Ausgestaltung der Erfindung beträgt die Höhe des Abströmschlitzes maximal 0,5% der zwischen der Propellerblattspitze und der Nabenachse gemessenen Propellerblatthöhe. Als besonders vorteilhaft hat sich eine Schlitzhöhe erwiesen, die bei 0,1% der Propellerblatthöhe liegt. Die Länge des Abströmschlitzes liegt zwischen 10 und 50% der an der Propellernabe gemessenen Sehnenlänge des Propellerblattes.

In weiterer Ausgestaltung der Erfindung ist die Höhe des Abströmschlitzes konstant. Das heißt, der Abströmschlitz erstreckt sich in gleichbleibendem Abstand entlang der Kontur der Propellernabe. Die Höhe des Abströmschlitzes kann sich aber auch in Richtung der Vorderkante allmählich verringern.

Der Abströmschlitz kann sowohl in starr mit der Propellernabe verbundenen Propellerblättern ausgebildet sein als auch bei auf einem in der Propellernabe gelagerten Drehteller befestigten Propellerblättern vorgesehen sein.

Ein Ausführungsbeispiel der Erfindung wird anhand der Zeichnung näher erläutert. Es zeigen:
- Fig. 1: eine Vorderansicht eines Propellers;
- Fig. 2: ein fest mit der Propellernabe verbundenes Pro- pellerblatt;
- Fig. 3: ein in der Propellernabe verschwenkbares Propel- lerblatt;
- Fig. 4: eine vergrößerte schematische Darstellung des Übergangsbereichs zwischen Propellerblatt und Propellernabe; und
- Fig. 5: eine vergrößerte schematische Darstellung des Übergangsbereichs zwischen einem in der Nabe ge- lagertem Drehteller und dem auf diesem befestig- ten Propellerblatt.

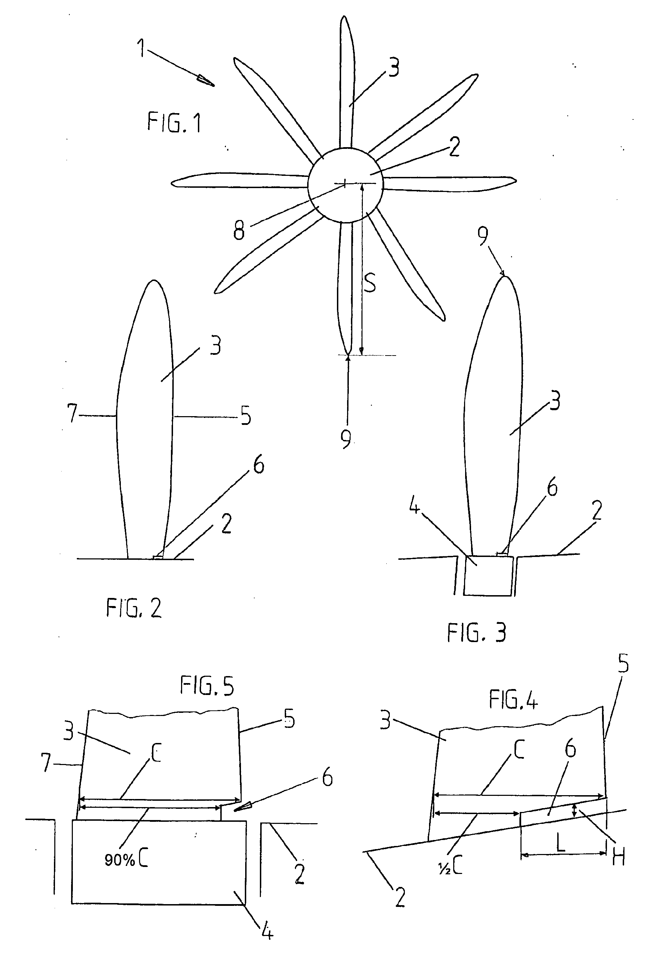

Fig. 1 zeigt einen Propeller 1 mit von einer Propellernabe 2 ausgehenden Propellerblättern 3, die - wie Fig. 2 zeigt - starr mit der Propellernabe 2 verbunden sein können oder - wie Fig. 3 zeigt - an einem in der Propellernabe 2 drehbar gelagerten Drehteller 4 befestigt und damit um ihre Längsachse verschwenkbar sein können. Aufgrund der hohen Rotationsgeschwindigkeit und des extrem dicken Profils der gemäß dem Stand der Technik eingesetzten Propellerblätter kommt es im Übergangsbereich zwischen Propellerblatt und Propellernabe zu Strömungsablösungen und Aufwirbelungen und daraus resultierenden Propellerverlusten. Diesem Sekundärströmungsphänomen und den dadurch bedingten Verlusten wird durch einen in die Propellerblatthinterkante 5 eingeformten Abströmschlitz 6, der unmittelbar an die Oberfläche der Propellernabe 2 angrenzt, entgegengewirkt. Die Höhe H des Abströmschlitzes 6 ist so gewählt, dass zwar gerade die Luftgrenzschicht, aber nicht die Hauptluftströmung abfließen kann. Die Länge des Abströmschlitzes 6 beträgt - wie Fig. 5 zeigt - mindestens 10% der Sehnenlänge C des Propellerblattes 3 an der Propellernabe 2 und - wie Fig. 4 zeigt - maximal 50% der Sehnenlänge C. Die Form des Abströmschlitzes 6 folgt vorzugsweise der Nabenkontur (Fig. 4), kann sich aber auch - wie Fig. 5 zeigt - in Richtung der Vorderkante 7 des Propellerblattes 3 verjüngen. Die Höhe H des Abströmschlitzes 6 beträgt maximal 0,5% der von der Nabenachse 8 bis zur Propellerblattspitze 9 reichenden Propellerblatthöhe S. Ein optimaler Wert der Höhe H des Abströmschlitzes 6 liegt bei 0,1% der Propellerblatthöhe S. Mit der so im Übergangsbereich zwischen der Propellernabe und dem Propellerblatt gestalteten Propellergeometrie und der dadurch verbesserten Sekundärströmung in diesem Bereich verringern sich die Propellerverluste und steigt der Propellerschub. Der Propellerschub kann um 0,5% gesteigert werden, so dass der Treibstoffverbrauch sinkt.

### Bezugszeichenliste

- 1: Propeller
- 2: Propellernabe
- 3: Propellerblatt
- 4: Drehteller
- 5: Propellerblatthinterkante
- 6: Abströmschlitz
- 7: Vorderkante
- 8: Nabenachse
- 9: Propellerblattspitze
- H: Höhe von 6
- L: Länge von 6
- S: Propellerblatthöhe

## Patentansprüche

1. Propeller, insbesondere für Flugzeuge, der eine mit einer Antriebswelle verbundene Propellernabe (2) mit an dieser angebrachten Propellerblättern (3), die eine Vorderkante (7), eine Propellerblatthinterkante (5) und eine Propellerblattspitze (9) aufweisen, umfasst, **gekennzeichnet durch** einen zur Verbesserung der Sekundärluftströmung im Übergangsbereich zwischen Propellerblatt und -nabe ausgebildeten, von der Propellerblatthinterkante (5) ausgehenden Abströmschlitz (6), der so dimensioniert ist, dass gerade die Luftgrenzschicht abfließen kann.

2. Propeller nach Anspruch 1, **dadurch gekennzeichnet, dass** die Höhe (H) des Abströmschlitzes (6) maximal 0,5% der zwischen der Propellerblattspitze (9) und der Nabenachse (8) gemessenen Propellerblatthöhe (S) beträgt.

3. Propeller nach Anspruch 2, **dadurch gekennzeichnet, dass** die Höhe (H) des Abströmschlitzes (6) 0,1% der Propellerblatthöhe (S) beträgt.

4. Propeller nach Anspruch 1, **dadurch gekennzeichnet, dass** die Länge (L) des Abströmschlitzes (6) zwischen 10 und 50% der Sehnenlänge (C) des Propellerblattes an der Propellernabe beträgt.

5. Propeller nach Anspruch 2 oder 3, **dadurch gekennzeichnet, dass** die Höhe (H) des Abströmschlitzes (6) der Kontur der Propellernabe (2) folgt und konstant ist.

6. Propeller nach Anspruch 2 oder 3, **dadurch gekennzeichnet, dass** sich die Höhe (H) des Abströmschlitzes (6) in Richtung der Vorderkante (7) allmählich verringert.

7. Propeller nach Anspruch 1, **dadurch gekennzeichnet, dass** die Propellerblätter (3) unmittelbar auf der Propellernabe (2) oder auf einem in der Propellernabe (2) gelagerten Drehteller (4) befestigt sind.
